# EUROPÄISCHE PATENTANMELDUNG

(11) **EP 0 983 827 A1**
(43) Veröffentlichungstag der Anmeldung: **08.03.2000**
(21) Anmeldenummer: 98810863.5
(22) Anmeldetag: 31.08.1998
(51) Int. Cl.: B26F 3/00, C03B 33/03, B65G 49/06

(54) **Wasserstrahl-Schneideanlage**

(71) Anmelder: Bystronic Laser AG, CH-3362 Niederönz (CH)
(72) Erfinder: Zumstein, Ernst, 3400 Burgdorf (CH)
(74) Vertreter: AMMANN PATENTANWAELTE AG BERN

(57) **Zusammenfassung**

Wasserstrahl-Schneideanlage zum Schneiden von Teilen (11-16) einer Platte (17), welche insbesondere aus Glas, Verbundglas, Metall, Kunststoff, Verbundwerkstoff, Keramik oder Gestein bestehen kann. Zur Vermeidung von Beschädigungen der Platte (17) während des Schneidevorganges ist in der Anlage eine erste Transportvorrichtung vorgesehen, durch welche die Platte in einer ersten Transportrichtung (X-Richtung) geradlinig bewegbar ist, wobei die erste Transportvorrichtung Mittel zur Bildung von wenigstens zwei Wasserkissen (21-29) enthält, welche die zu schneidenden Platten tragen, und wobei die Oberflächen der wenigstens zwei Wasserkissen in derselben Ebene liegen.

## Beschreibung

Die Erfindung betrifft eine Wasserstrahl-Schneideanlage zum Schneiden von einer Platte, welche insbesondere aus Glas, Verbundglas, Metall, Kunststoff, Verbundwerkstoff, Keramik oder Gestein bestehen kann.

In bekannten Glas-Schneideanlagen werden teilweise Luftkissen eingesetzt für das Verschieben der zu bearbeitenden Platte.

Die Verwendung eines Luftkissens bei einer Wasserstrahl-Schneidanlage hat unter anderem den Nachteil, dass es nicht genügend dick ist, um das Zerkratzen des Werkstücks durch Abrasiv-Sandkörner zu verhindern. Auch andere bisher bekannte Auflagen, wie Rollen, Kugeln, Bürsten etc. können zu Kratzern am Werkstück führen.

Andere Wasserstrahl-Schneideanlagen verhindern das Zerkratzen des Werkstücks, indem das Werkstück nicht bewegt wird, und das Werkzeug in beiden Achsen verfahren wird. Dieses Verfahren hat jedoch den Nachteil, dass der Schneidstrahl nicht nur das Werkstück, sondern auch den Auflagerost zerschneidet. Dabei besteht die Gefahr, dass der Schneidstrahl durch den Auflagerost derart abgelenkt wird, dass es zu Beschädigungen der Werkstückunterseite kommt.

Die Beschädigung der Werkstückunterseite kann nur verhindert werden, wenn die Auflage jeweils der Kontur des zu schneidenden Werkstücks angepasst wird. Dies wiederum bedeutet eine erhebliche Einschränkung der Flexibilität von CNC (Computerized Numerical Control)-gesteuerten Wasserstrahl-Schneideanlagen.

Der Erfindung liegt daher die Aufgabe zugrunde, eine Anlage der oben erwähnten Art zur Verfügung zu stellen, mit der die oben erwähnten Nachteile beseitigt werden können.

Diese Aufgabe wird erfindungsgemäss mit einer Anlage gelöst, welche die Merkmale im kennzeichnenden Teil des Anspruchs 1 enthält.

Mit der erfindungsgemässen Anlage werden beim Schneidvorgang insbesondere folgende Vorteile erzielt:
- flexibler Zuschnitt komplexer Konturen in Platten unterschiedlicher Dicke ohne die Gefahr, dass das Werkstück zerkratzt wird,
- kaltes Schneidverfahren, das keine thermisch induzierten Veränderungen am Werkstück verursacht,
- keine Verbrennungsprodukte wie (giftige) Rauchgase, wie sie bei thermischen Trennverfahren entstehen,
- es werden spannungsfreie Schnittkanten sowie saubere Schnitte ohne Gratbildung und Materialdeformationen erzielt,
- die Anlage eignet sich vorzüglich zum Schneiden von Laminaten, z.B. Verbundglas, da die unterschiedlichen Materialeigenschaften der Laminatschichten beim Schneidvorgang eine untergeordnete Rolle spielen.

Bevorzugte Ausführungsformen der erfindungsgemässen Anlage enthalten die Merkmale, die in den Unteransprüchen definiert sind.

In einer bevorzugten Ausführungsform liegt die Platte während des Schneidvorgangs auf zwei Wasserkissen, die voneinander beabstandet sind, wobei der Abstand zwischen diesen Wasserkissen veränderbar ist. Diese Ausführungsform ermöglicht, den Abstand zwischen den Wasserkissen in Funktion der Dicke der Platte und der Form des zu schneidenden Teils zu wählen und somit unerwünschte Brüche oder unsaubere Schnitte zu vermeiden, was vorkommen kann, wenn z.B.relativ dünne Platten mit einem zu grossen Abstand zwischen den erwähnten Wasserkissen geschnitten werden.

Die Erfindung wird im folgenden anhand von in den beiliegenden Zeichnungen dargestellten Ausführungsbeispielen näher erläutert. Es zeigen:
Fig. 1 eine schematische Draufsicht einer erfindungsgemässen Wasserstrahl-Schneideanlage.
Fig. 2 eine schematische Seitenansicht des Schneidebereiches der Anlage gemäss Fig. 1.
Fig. 3 eine etwas vergrösserte Ausführung der Seitenansicht der Fig. 2, aus der eine bevorzugte Ausführungsform des Schneidebereiches ersichtlich ist.
Fig. 4 eine schematische Seitenansicht von einem der Greifer 51-54 in Fig. 1.
Fig. 5a einen schematischen Querschnitt eines Teiles der Anordnung zur Erzeugung eines der Wasserkissen 21-29 in Fig. 1.
Fig. 5b eine schematische Draufsicht der Anordnung gemäss Fig. 5a.
Fig. 6 einen schematischen Querschnitt der Struktur von einem der Wasseraustritte 41 in Fig. 5b
Fig. 7 einen schematischen Querschnitt der Beschickungseinrichtung 101 in Fig. 1.

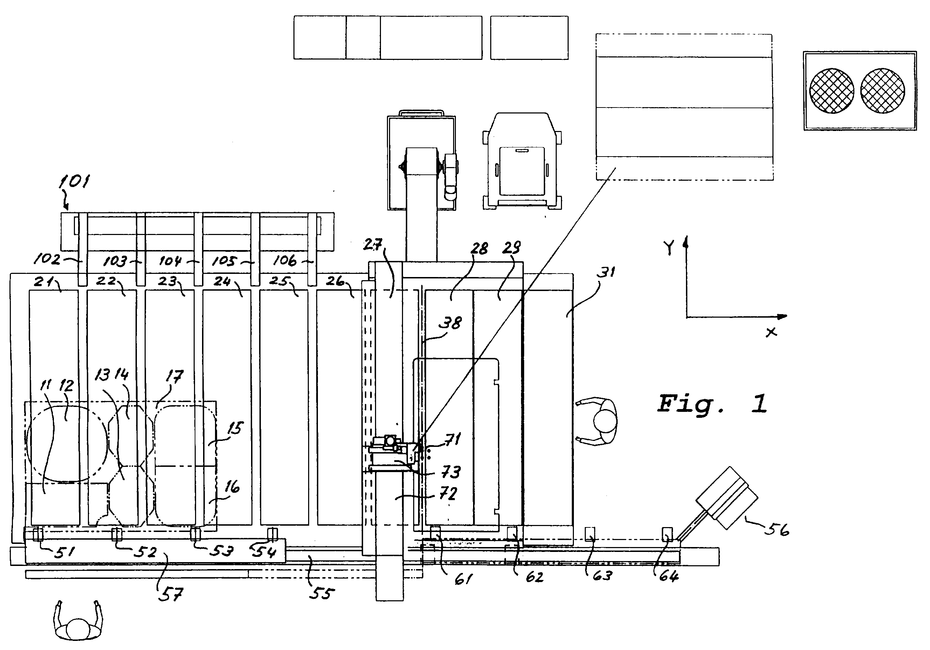

In Fig. 1 ist eine erfindungsgemässe Wasserstrahl-Schneidanlage zum Schneiden von Teilen 11-16 einer Platte 17 dargestellt. Die Platte 17 kann insbesondere aus Glas, Verbundglas, Metall, Kunststoff, Verbundwerkstoff, Keramik oder Gestein bestehen. Die Anlage enthält eine erste Transportvorrichtung, durch welche die Platte 17 geradlinig in einer ersten Transportrichtung, z.B. in X-Richtung, hin und her bewegbar ist. Diese erste Transportvorrichtung enthält Mittel zur Bildung von einer Anzahl Wasserkissen 21 bis 29, welche die zu schneidende Platte 17 von einem Ladebereich (auf der linken Seite der Figur 1 dargestellt) zu einem Schneidbereich, wo ein Wasserstrahl-Schneidkopf 71 wirksam ist, und von dort zu einem Entnahmetisch oder Abräumbereich 31 tragen. Die Oberflächen aller Wasserkissen 21-29 liegen in derselben Ebene, die vorzugsweise, aber nicht zwingend eine waagerechte Ebene ist.

Der Schneidekopf 71 ist in an sich bekannter Weise mit einem Hochdruck-Aggregat verbunden, welches Wasser mit dem nötigen Druck liefert, und mit einem Abrasiv-Bunker, welcher die Abrasiv-Sandkörner liefert, die im Schneidkopf 71 mit dem Hochdruckwasser gemischt werden, um den Schneidstrahl zu bilden.

Die in Fig. 1 dargestellte Anlage enthält ferner eine mit dem Schneidkopf 71 verbundene, zweite Transportvorrichtung, welche eine Brücke 72 und einen darauf fahrenden Schneidewagen 73 umfasst, welcher den Schneidkopf 71 trägt. Die zweite Transportvorrichtung dient dazu, den Schneidkopf 71 geradlinig in einer zweiten Transportrichtung, z.B. in Y-Richtung, in einer Schneidebene 38 hin und her zu bewegen. Diese zweite Transportrichtung bildet mit der ersten Transportrichtung, in der die Platte 17 durch die erste Transportvorrichtung während dem Schneidvorgang bewegbar ist, einen Winkel. Im bevorzugten Ausführungsbeispiel gemäss Fig. 1 verlaufen die erste Transportrichtung (X-Richtung) und die zweite Transportrichtung (Y-Richtung) senkrecht zueinander.

Wie aus Fig. 1 ersichtlich, hat jedes der Wasserkissen 21-29 vorzugsweise eine längliche, rechteckige Oberfläche, deren Längsachse parallel zur Bewegungsrichtung (Y-Richtung) des Schneidkopfs 71 verlauft.

Die oben beschriebene Anlage ermöglicht, aus der Platte 17 Teile 11 bis 16 von verschiedenen Formen zu schneiden.

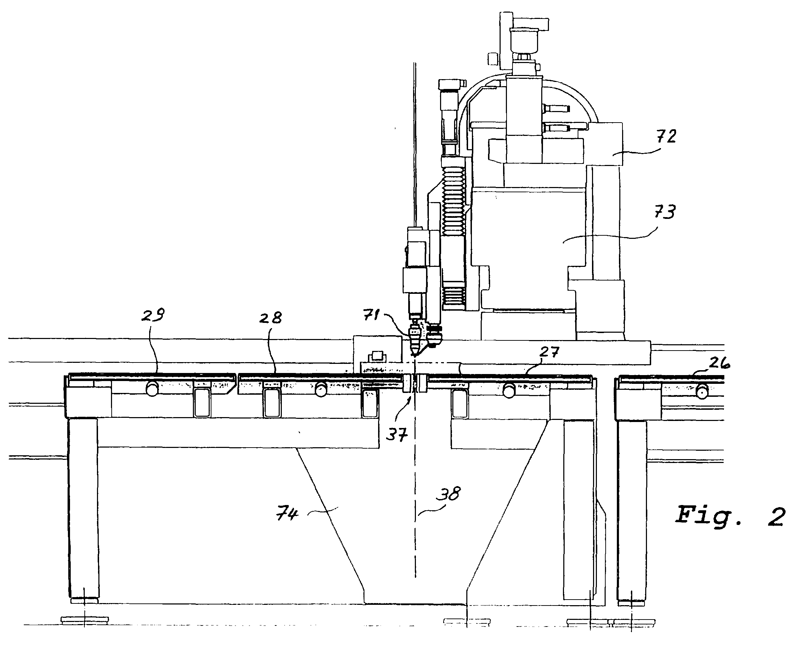

Wie aus Fig. 2 ersichtlich, liegt der vom Schneidkopf 71 austretende Schneidstrahl in der Schneidebene 38, die zwischen zwei benachbarten Wasserkissen 27, 28 verlauft. Dieser Schneidstrahl fällt in ein Auffangbecken 74, welches unterhalb des Schneidkopfs 71 und der damit verbundenen zweiten Transportvorrichtung 72, 73 angeordnet ist.

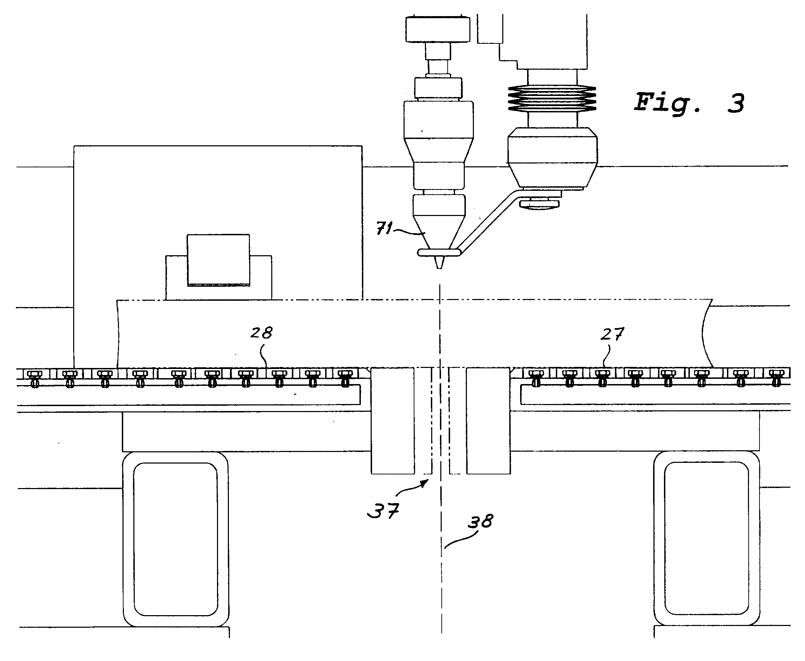

In der bevorzugten Ausführung gemäss Fig. 3 ist der Abstand zwischen den Wasserkissen 27, 28 veränderbar. Diese Ausführungsform ermöglicht es, den Abstand zwischen den Wasserkissen 27, 28 und somit die Breite des sogenannten Catchers in Funktion der Dicke der Platte und der Form des zu schneidenden Teils zu wählen und somit unerwünschte Brüche oder unsaubere Schnitte zu vermeiden, was vorkommen kann, wenn z.B. relativ dünne Platten mit einem zu grossen Abstand zwischen den erwähnten Wasserkissen geschnitten werden.

Die erste Transportvorrichtung, welche zum Transport der Platte 17 auf Wasserkissen 21-29 in X-Richtung dient, enthält mehrere Greifer 51-54, welche einen länglichen Randbereich der transportierten Platte 17 fassen und dazu geeignet sind, die Platte 17 in X-Richtung hin und her zu ziehen. Dabei wird die Platte 17 in dem einen Sinn näher zum Schneidkopf 71 bzw. Schneidebene 38 und in dem entgegengesetzten Sinn weg vom Schneidkopf 71 bzw. von der Schneidebene 38 gebracht. In der Fig. 1 werden die Greifer 51-54 in ihrer Startposition im Ladebereich dargestellt. Die Endpositionen dieser Greifer sind in Figur 1 schematisch mit Vierecken 61-64 dargestellt. Die Greifer 51-54 sind auf einem Träger 57 montiert und werden in X-Richtung mittels eines geeigneten Antriebs 55 bewegt, z.B. einer motorgetriebenen Umlaufspindel, wobei die dazugehörige Steuerung in einer Konsole 56 untergebracht ist.

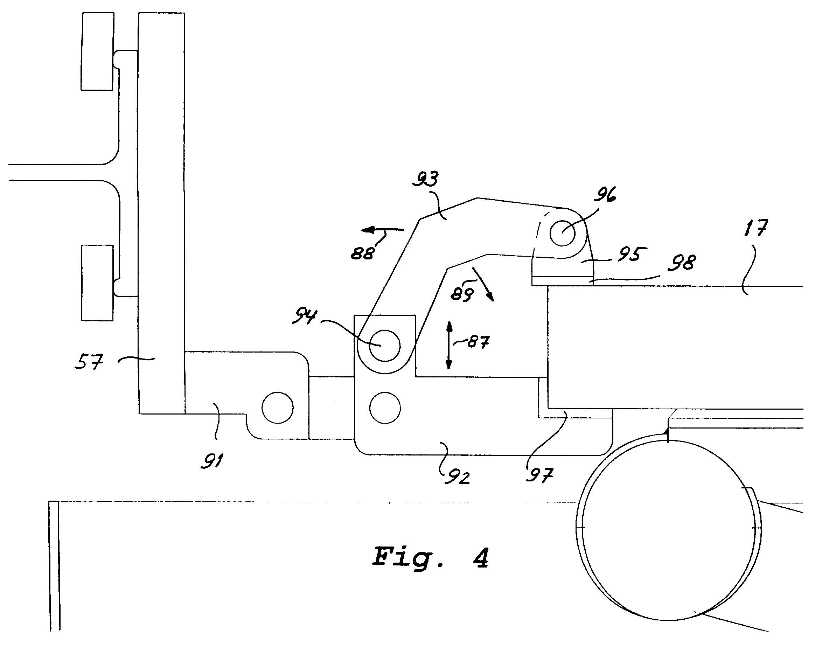

Um eine Beschädigung der Platte 17 durch die Greifer auszuschliessen, ist es wichtig, dass die Kraft, welche die Greifer 51-54 auf die Platte 17 ausüben, praktisch eine reine Ziehkraft in X-Richtung ist. Diese Wirkung wird z.B. mit der in Fig. 4 schematisch dargestellten Greiferstruktur erzielt. Jeder der Greifer 51-54 hat diese Struktur.

Wie in Fig. 4 gezeigt, ist die dort dargestellte Greiferstruktur über ein Verbindungsglied 91 mit dem Träger 57 des Antriebs 55 verbunden. Wie aus Fig. 4 ersichtlich, fassen zwei aus Kunststoff bestehende Kontaktflächen 97, 98 des Greifers einen Rand der Platte 17. Die Kontaktflächen 97, 98 gehören zu einer zangenartigen Struktur, welche sich aus einem ersten Halter 92, einem über eine Achse 94 damit verbundenen Arm 93 und einem über eine Achse 96 damit verbundenen zweiten Halter 95 zusammensetzt. Die Halter 92 und 95 haben je eine Kontaktfläche 97 bzw. 98, die aus Kunststoff bestehen. Der Arm 93 ist um die Achse 94 drehbar, was in Fig. 4 mit Pfeilen 88, 89 angedeutet ist. Der Halter 92 ist um die Achse 96 drehbar. Der Arm wird mit geeigneten, in Fig. 4 nicht gezeigten Mitteln, z.B. mittels einer Schraube oder einer Zugfeder, im Uhrzeigersinn gedreht und wirkt dabei mit dem Halter 92 zusammen, um den Rand der Platte 17 zu fassen. Der Halter 92 ist über einen gewissen Bereich in vertikaler Richtung verschiebbar, was in Fig. 4 mit den Pfeilen 87 angedeutet ist. Der Teil der in Fig. 4 dargestellten Struktur des Greifers, welche den Plattenrand fasst, ist somit innerhalb eines vertikalen Bereichs bewegbar und auch innerhalb eines Winkelbereichs drehbar.

Anstelle der in Fig. 4 dargestellten Struktur eines der Greifer 51-54 ist z.B. eine Greiferanordnung verwendbar, welche die Platte 17 mittels Vakuum fasst und welche lediglich aus einem mit dem Glied 91 verbundenen, in vertikaler Richtung biegsamen Halter (in den beiliegenden Zeichnungen nicht dargestellt) und einer mittels Vakuum hergestellten Verbindung zwischen diesem Halter und der Platte 17 besteht.

In der in Fig. 1 dargestellten, bevorzugten Ausführungsform der Wasserstrahl-Schneidanlage sind die Wasserkissen 21-29 voneinander beabstandet.

Die Wasserkissen 21-29 weisen eine Dicke auf, welche vorzugsweise zwischen 100 und 500 Mikrometer liegt.

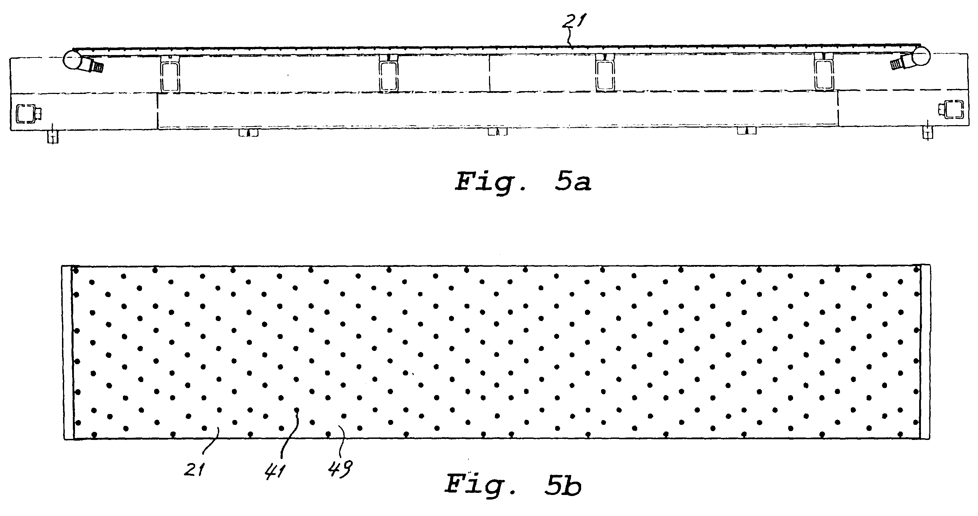

Jedes der Wasserkissen 21-29 wird mit einer Anordnung erzeugt, welche in den Figuren 5a und 5b dargestellt ist. Eine solche Anordnung enthält eine Vielzahl gleichmässig verteilter Wasseraustritte 41, deren Ausgänge in einer Ebene liegen, die vorzugsweise, aber nicht zwingend eine waagrechte Ebene ist. Die Zahl der Wasseraustritte 41 liegt vorzugsweise zwischen 100 und 1000 pro Quadratmeter.

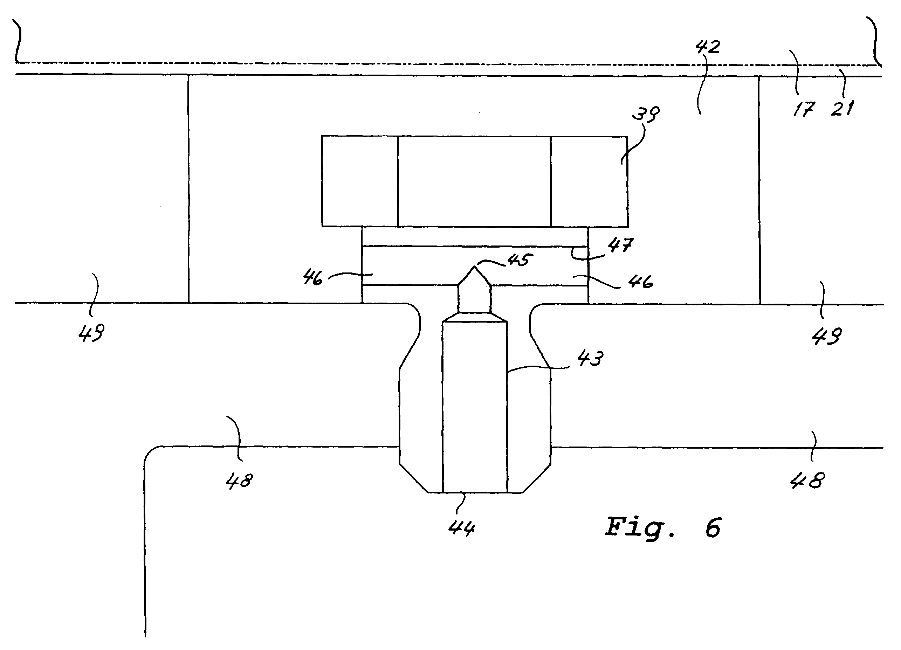

Fig. 6 zeigt schematisch die Struktur eines der Wasseraustritte 41 in Fig. 5b. Gemäss Fig. 6 ist ein solcher Wasseraustritt 41 durch eine nach oben offene Kammer 42 gebildet, welche eine Düse 43 und eine Ablenkfläche 47 enthält.

Die Düse 43 ist Teil einer Düseneinheit, die mittels einer Schraube 39 in einer Öffnung eines Trägers 48 montiert ist. Die Düse 43 hat einen Eingang 44 und einen Ausgang 45, der in einen Kanal oder Bohrung 46 der soeben erwähnten Düseneinheit mündet. Die Wand dieses Kanals, welche gegenüber dem Düsenausgang 45 liegt, bildet die oben erwähnte Ablenkfläche.

Die Düse 43 hat z.B. einen Bohrungsdurchmesser von ca. 0,5 mm, und der Wasseraustritt 41 hat z.B. einen Durchmesser von ca. 15 mm. Der Druck am Düseneingang 44 liegt z.B. zwischen 0,2 und 1,5 bar.

Die Kammer 42 ist durch eine Aussparung in einer Kunststoffschicht 49 gebildet, die auf dem Träger 48 montiert ist.

Durch eine geeignete Verbindung gelangt Wasser unter Druck zum Eingang 44 der Düse 43 und verlässt die Düse in Form eines Wasserstrahls am Düsenausgang 45. Der aus der Düse 43 austretende Wasserstrahl trifft auf die Ablenkfläche 47. Der abgelenkte Wasserstrahl verlässt die Kammer 42 durch ihren oberen Ausgang und trägt zur Bildung eines der Wasserkissen 21-29 bei, der die Platte 17 trägt.

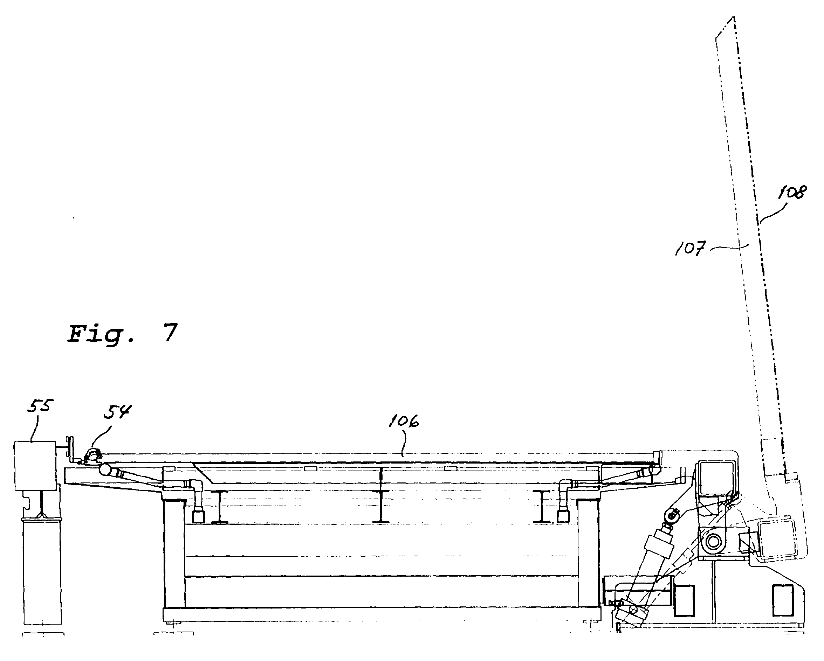

Eine Platte 17, welche in der Wasserstrahl-Schneideanlage gemäss Fig. 1 bearbeitet wird, wird dort mittels einer Beschickungseinrichtung 101 auf die Wasserkissen 21-29 geladen. Eine bevorzugte Ausführungsform der Beschickungseinrichtung 101 ist in der Fig. 7 dargestellt. Diese Einrichtung hat mehrere Arme 102-106 deren Oberteile sich in einer Ebene 108 befinden. Zur Aufnahme einer Platte 17 werden die Arme 102-106 der Beschickungseinrichtung 101 in eine annähernd vertikale Lage 107 gebracht. Nach Positionierung der Platte 17 auf der Beschickungseinrichtung 101 werden die Arme 102-106 durch einen dazugehörigen Antrieb gesenkt und in waagrechte Lage gebracht, wobei die Arme 102-106 zwischen den Anordnungen zur Erzeugung der Wasserkissen 21-26 versenkt werden. Auf diese Weise wird die Platte 17 auf die Wasserkissen 21-24 gelegt. Die Verwendung einer Beschickungseinrichtung der soeben erwähnten Art in einer erfindungsgemässen Wasserstrahl-Schneideanlage wird dadurch ermöglicht, dass die Platte 17 nur in X-Richtung transportiert wird und der Schneidkopf 71 nur in Y-Richtung bewegt wird. Dies ist so, weil es mit einer Hybridanordnung dieser Art ausgeschlossen ist, dass die Arme der Beschickungseinrichtung vom Schneidkopf 71 mitgeschnitten werden, was hingegen bei Anordnungen vorkommen kann, bei denen der Schneidkopf 71 in X- und in Y-Richtung bewegt und die zu schneidende Platte 17 nicht bewegt wird.

Auf der rechten Seite der Figur 7 ist einer der Greifer 51-54 in Fig. 1 und dessen Antrieb 55 dargestellt.

Anstelle der Beschickungseinrichtung 101 gemäss Figuren 1 und 7 kann ein Beschickungstisch verwendet werden, der als ganzes schwenkbar ist und daher die Funktion der Beschickungseinrichtung 101 übernehmen kann.

## Patentansprüche

1. Wasserstrahl-Schneideanlage zum Schneiden von Teilen (11-16) einer Platte (17), welche insbesondere aus Glas, Verbundglas, Metall, Kunststoff, Verbundwerkstoff, Keramik oder Gestein bestehen kann, welche Anlage dadurch gekennzeichnet ist, dass sie eine erste Transportvorrichtung enthält, durch welche die Platte in einer ersten Transportrichtung (X-Richtung) geradlinig bewegbar ist, wobei die erste Transportvorrichtung Mittel zur Bildung von wenigstens zwei Wasserkissen (21-29) enthält, welche die zu schneidenden Platten tragen, wobei die Oberflächen der wenigstens zwei Wasserkissen in derselben Ebene liegen.

2. Wasserstrahl-Schneideanlage gemäss Anspruch 1, dadurch gekennzeichnet, dass sie ferner einen Schneidkopf (71) und eine damit verbundene, zweite Transportvorrichtung (72, 73) enthält, durch welche der Schneidkopf (71) in einer zweiten Transportrichtung (Y-Richtung) geradlinig bewegbar ist, welche sich von der ersten Transportrichtung (X-Richtung) unterscheidet.

3. Wasserstrahl-Schneideanlage gemäss Anspruch 2, dadurch gekennzeichnet, dass die erste Transportrichtung (X-Richtung) und die zweite Transportrichtung (Y-Richtung) senkrecht zueinander verlaufen.

4. Wasserstrahl-Schneideanlage gemäss einem der Ansprüche 1 bis 3, dadurch gekennzeichnet, dass jedes der Wasserkissen (21-29) eine längliche rechteckige Oberfläche hat, deren Längsachse parallel zur zweiten Transportrichtung (Y-Richtung) verlauft.

5. Wasserstrahl-Schneideanlage gemäss einem der Ansprüche 2 bis 4, dadurch gekennzeichnet, dass der vom Schneidkopf (71) austretende Schneidstrahl in einer Ebene liegt, die zwischen zwei benachbarten Wasserkissen (27, 28) verlauft.

6. Wasserstrahl-Schneideanlage gemäss Anspruch 5, dadurch gekennzeichnet, dass der Abstand zwischen den benachbarten Wasserkissen (27, 28) veränderbar ist.

7. Wasserstrahl-Schneideanlage gemäss einem der Ansprüche 2 bis 6, dadurch gekennzeichnet, dass unterhalb des Schneidkopfs (71) und der damit verbundenen zweiten Transportvorrichtung (72, 73) ein Auffangbecken (74) angeordnet ist.

8. Wasserstrahl-Schneideanlage gemäss einem der Ansprüche 1 bis 7, dadurch gekennzeichnet, dass die erste Transportvorrichtung ferner mehrere Greifer (51-54) enthält, welche einen länglichen Randbereich der transportierten Platte (17) fassen und dazu geeignet sind, die Platte (17) entlang der ersten Transportrichtung (X-Richtung) in entgegengesetzten Richtungssinnen zu ziehen, wobei in dem einen Sinn die Platte (17) näher zu einem Schneidkopf (71) und in dem entgegengesetzten Sinn die Platte (17) weg vom Schneidkopf (71) gebracht wird.

9. Wasserstrahl-Schneideanlage gemäss Anspruch 8, dadurch gekennzeichnet, dass jeder der Greifer (51-54) innerhalb eines vertikalen Bereichs bewegbar und auch innerhalb eines Winkelbereichs drehbar ist.

10. Wasserstrahl-Schneideanlage gemäss einem der Ansprüche 1 bis 9, dadurch gekennzeichnet, dass jedes der wenigstens zwei Wasserkissen (21-29) eine Dicke aufweist, welche zwischen 100 und 500 Mikrometer liegt.

11. Wasserstrahl-Schneideanlage gemäss einem der Ansprüche 1 bis 10, dadurch gekennzeichnet, dass die Mittel zur Bildung von jedem der wenigstens zwei Wasserkissen (21-29) eine Anordnung umfasst, welche eine Vielzahl gleichmässig verteilter Wasseraustritte (41) enthält, deren Ausgänge in einer Ebene liegen.

12. Wasserstrahl-Schneideanlage gemäss Anspruch 11, dadurch gekennzeichnet, dass jeder der Wasseraustritte (41) durch eine nach oben offene Kammer (42) gebildet ist, welche eine Düse (43) und eine Ablenkfläche (47) enthält, wobei der aus der Düse (43) austretende Wasserstrahl auf die Ablenkfläche (47) trifft und der abgelenkte Wasserstrahl die Kammer (42) durch ihren oberen Ausgang verlässt und zur Bildung eines Wasserkissens (21-29) beiträgt.

13. Wasserstrahl-Schneideanlage gemäss einem der Ansprüche 1 bis 12, dadurch gekennzeichnet, dass die zu schneidende Platte (17) mittels einer Beschickungseinrichtung (101) auf die Wasserkissen (21-29) geladen wird, wobei die Platte (17) von schwenkbaren Armen der Beschickungseinrichtung getragen werden, welche während der Beladung zwischen Anordnungen zur Erzeugung benachbarter Wasserkissen versenkbar sind.

14. Wasserstrahl-Schneideanlage gemäss Anspruch 13, dadurch gekennzeichnet, dass anstelle der Beschickungseinrichtung (101) ein schwenkbarer Beschickungstisch vorgesehen ist.
